# EUROPÄISCHE PATENTANMELDUNG

(11) **EP 0 958 737 A1**
(43) Veröffentlichungstag der Anmeldung: **24.11.1999**
(21) Anmeldenummer: 98250170.2
(22) Anmeldetag: 19.05.1998
(51) Int. Cl.: A01G 27/00

(54) **Elektrisches Haushaltsgerät zum Begiessen von Zimmerpflanzen**

(71) Anmelder: Katzschke, Klaus, 18356 Barth (DE)
(72) Erfinder: Katzschke, Klaus, 18356 Barth (DE)

(57) **Zusammenfassung**

Das elektrische Haushaltsgerät zum Begiessen von Blumen und anderen Zimmerpflanzen besteht hauptsächlich aus einem Wasserbehälter 1, einer Miniatur-Pumpe 2, einer Zeitschaltuhr 3, einem Wasserstandssensor 4 und Miniaturschläuchen 7,9, an die Duschen 11 oder Lochschläuche 12 angeschlossen werden können. Das Gerät hat die Funktion einer elektrischen Zimmergiesskanne. Es lässt sich zwischen den Blumentöpfen auf dem Fensterbrett aufstellen und entsprechend dem Wasserbedarf der Pflanzen programmieren. Feste Installationen sind am Aufstellungsort nicht erforderlich.

## Beschreibung

Die Erfindung betrifft ein elektrisch betriebenes Haushalts-Gerät zum Begiessen von Zimmerpflanzen. Es hat die Funktion einer automatischen Giesskanne.

Zum Bewässern von Pflanzen in Gärtnereibetrieben werden automatische Anlagen verwendet, die mit Hilfe einer Zeitschaltuhr gesteuert werden. Solche Anlagen sind aber zu gross, um in der Stube oder auf dem Fensterbrett Blumen oder andere Pflanzen regelmässig und automatisch zu begiessen.

Der Erfindung liegt die Aufgabe zugrunde, ein Gerät zu schaffen, das das Giessen von Blumen und Zimmerpflanzen für eine bestimmte Zeit automatisch durchführt, einfach zu bedienen ist, wenig Platz beansprucht und keine zusätzlichen stationären Installationen erfordert.

Die Aufgabe wird erfindungsgemäss dadurch gelöst, dass eine Miniatur-Wasserpumpe, wie sie beispielsweise im Modellbau bekannt ist, mit Hilfe einer Zeitschaltuhr programmiert wird und zu den vorgegeben Zeiten in programmierter Dauer Wasser aus einem Wasserbehälter über Miniatur-Schläuche zu den Pflanzen fördert. An die Enden der Miniatur-Schläuche können verschiedenartige Öffnungen wie Düsen oder Duschen gesteckt werden.

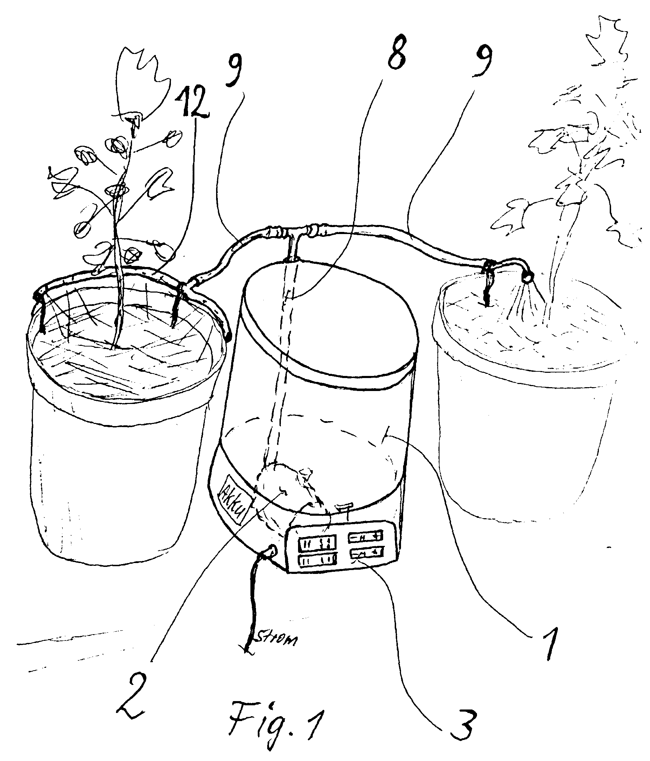

Fig.1 zeigt ein Ausführungsbeispiel der Erfindung. Wasserbehälter 1, Pumpe 2 und Zeitschaltuhr 3 bilden eine Einheit, d.h. der Wasserbehälter 1 steht nicht separat. Pumpe 2 und Zeitschaltuhr 3 sind im unteren Teil untergebracht, wo sich auch Batterien oder Akkus befinden können, wenn die Pumpe nicht aus dem Stomnetz über einen Transformator versorgt werden soll. Die Pumpe 2 saugt das Wasser direkt aus dem Wasserbehälter 1 und gibt es über die Druckleitung 8 an die Druckschläuche 9 ab. Da der Wasserbehälter 1 ein begrenztes Volumen hat, ist ein Sensor 4 erforderlich, der die Pumpe 2 abschaltet, wenn der Wasserbehälter 1 leer ist. Ein elektrisches Signal (z.B. Warnlampe) kann ausserdem Anzeigen, ob der Wasserbehälter 1 leer ist. Das ist besonders angebracht, wenn der Wasserbehälter 1 nicht durchsichtig ausgeführt wird. Der Wasserbehälter 1 muss manuell wieder aufgefüllt werden. Der Wasserverbrauch hängt davon ab, wie viele Pflanzen bzw. Schlauchenden angeschlossen sind und wie oft und wie lange begossen werden soll. Bei dieser Ausführung sollte der Was-Wasserbehälter 1 einen Deckel 5 haben, um die Verdunstungsrate klein zu halten.

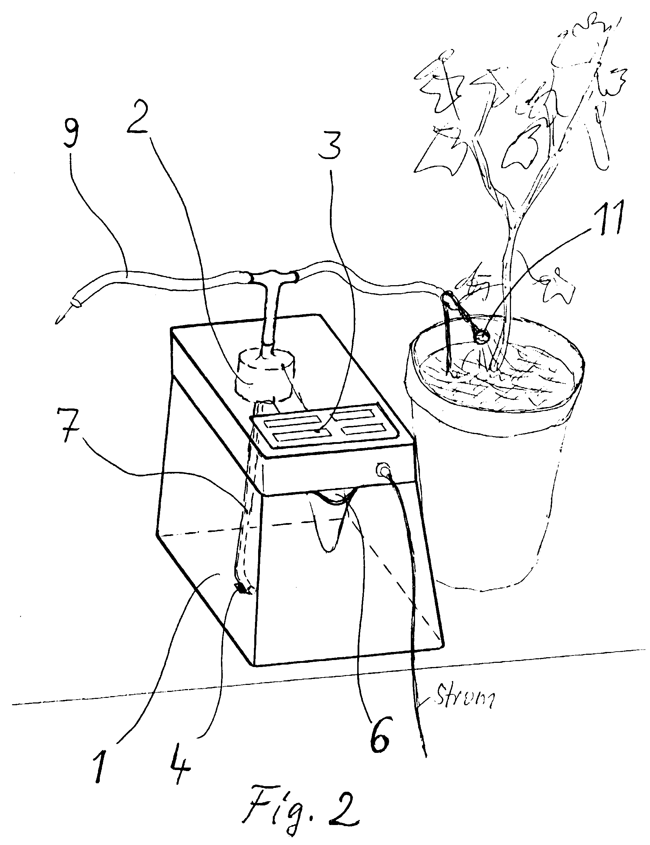

Fig.2 zeigt ein weiteres Ausführungsbeispiel der Erfindung, in dem die Pumpe 2 und die Zeitschaltuhr 3 über dem Wasserbehälter 1 angeordnet sind. Der Einfüllstutzen 6 dient dazu, den Wasserbehälter 1 nachzufüllen, ohne das Oberteil abnehmen zu müssen. Ein Deckel 5 für den Wasserbehälter 1 ist nicht erforderlich.

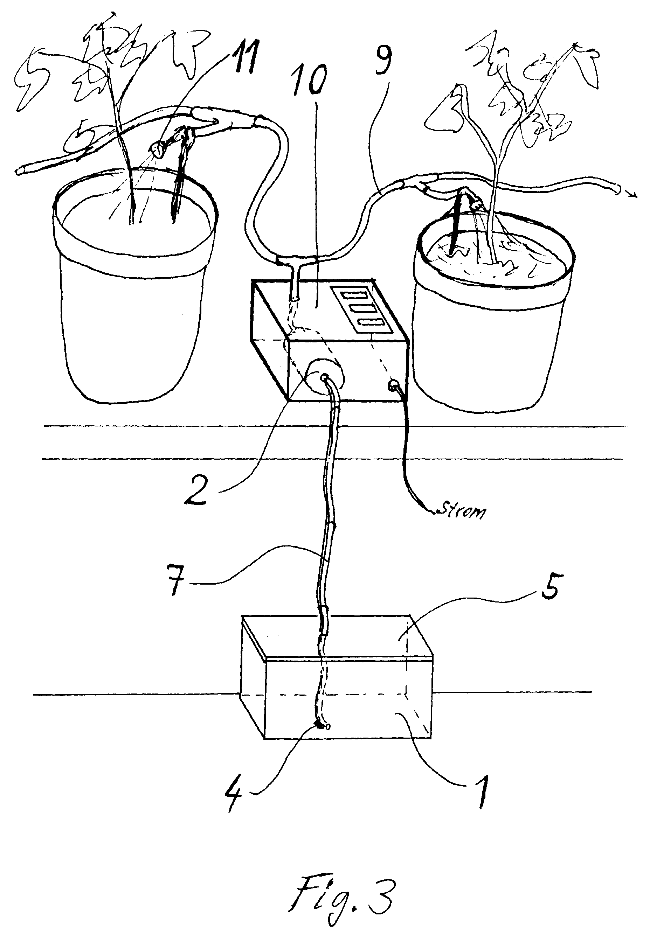

In Fig. 3 ist ein drittes Ausführungsbeispiel der Erfindung dargestellt. Der Wasserbehälter 1 mit Deckel 5 steht separat, z.B. auf dem Fussboden. Pumpe 2 und Zeitschaltuhr 3 sind zu einer Einheit 10 zusammengefasst und stehen auf dem Fensterbrett. Am Saugschlaug 7 wird der Wasserstandssensor 4 zum Wasserbehälter 1 mitgeführt. Die Druckschläuche 9 führen zu den Pflanzen. Dieses Ausführungsbeispiel ist sinnvoll, wenn z.B. auf dem Fensterbrett nicht genügend Platz für den Wasserbehälter 1 vorhanden ist. Die Einheit 10 kann so gestaltet sein, dass sie -wie im Ausführungsbeispiel Fig.2- auf den Wasserbehälter 1 gesetzt oder -wie in Ausführungsbeispiel 1-unter den Wasserbehälter 1 gestellt werden kann, wobei der Saugschlauch 7 von aussen über den Behälterrand gehängt wird.

Als Zubehör können je nach gewünschtem Giesseffekt z.B. Miniaturduschen 11 oder Lochschläuche 12 auf die Topfränder geklemmt werden.

## Patentansprüche

1. Elektrisches Haushaltsgerät zum Begiessen von Zimmerpflanzen, dadurch gekennzeichnet, dass sich das Wasser zum Begiessen in einem nachfüllbaren Behälter befindet und mit Hilfe einer Miniaturpumpe durch Miniaturschläuche zu den Pflanzen gefördert wird.

2. Elektrisches Haushaltsgerät zum Begiessen von Zimmerpflanzen nach Anspruch 1, dadurch gekennzeichnet, dass die Pumpe 2 mit Hilfe einer Zeitschaltuhr 3 programmiert werden kann.

3. Elektrisches Haushaltsgerät zum Begiessen von Zimmerpflanzen nach Anspruch 1, dadurch gekennzeichnet, dass durch einen Wasserstandssensor 4 die Pumpe 2 bei leerem Wasserbehälter 1 abgeschaltet wird.

4. Elektrisches Haushaltsgerät zum Begiessen von Zimmerpflanzen nach Anspruch 1, dadurch gekennzeichnet, dass bei leerem Wasserbehälter 1 ein elektrisches Signal (z.B. Warnlampe) erscheint.

5. Elektrisches Haushaltsgerät zum Begiessen von Zimmerpflanzen nach Anspruch 1, dadurch gekennzeichnet, dass Pumpe 2 und Zeitschaltuhr 3 zu einer Einheit zusammengefasst sind, die derart gestaltet ist, dass sie vom Wasserbehälter 1 separat aufgestellt werden kann oder auf den Wasserbehälter rutschsicher gesetzt oder unter den Wasserbehälter schlüssig gestellt werden kann.
